# EUROPEAN PATENT SPECIFICATION

(11) **EP 3 702 344 B1**
(45) Date of publication and mention of the grant of the patent: **02.06.2021**
(21) Application number: 20159445.4
(22) Date of filing: 26.02.2020
(51) Int. Cl.: C04B 41/85, C04B 41/89, C23C 4/12

(54) **THERMAL SPRAY DEPOSITED ENVIRONMENTAL BARRIER COATING**
MITTELS THERMISCHEN SPRITZENS ABGESCHIEDENE UMWELTSPERRBESCHICHTUNG
REVÊTEMENT DE BARRIÈRE ENVIRONNEMENTALE DÉPOSÉE PAR PULVÉRISATION THERMIQUE

(30) Priority: 26.02.2019 US 201916286067
(43) Date of publication of application: 02.09.2020
(73) Proprietor: Rolls-Royce High Temperature Composites Inc, Cypress, CA 90630 (US)
(72) Inventor: Wing, Bradley, Westminster, CA California 92683 (US)
(74) Representative: Rolls-Royce plc

(56) References cited:
- US-A- 5 391 404
- US-A- 5 869 146

## Description

The disclosure relates to techniques for forming environmental barrier coatings using thermal spray deposition.

Ceramic or ceramic matrix composite (CMC) materials may be useful in a variety of contexts where mechanical and thermal properties are important. For example, components of high temperature mechanical systems, such as gas turbine engines, may be made from ceramic or CMC materials. Ceramic or CMC materials may be resistant to high temperatures, but some ceramic or CMC materials may react with some elements and compounds present in the operating environment of high temperature mechanical systems, such as water vapor. Reaction with water vapor may result in the recession of the ceramic or CMC material. These reactions may damage the ceramic or CMC material and reduce mechanical properties of the ceramic or CMC material, which may reduce the useful lifetime of the component. Thus, in some examples, a ceramic or CMC material may be coated with an environmental barrier coating, which may reduce exposure of the substrate to elements and compounds present in the operating environment of high temperature mechanical systems.

US5869146 A and US5391404 A are directed to plasma sprayed mullite coatings onto the surface of a silicon-based substrate.

In some examples, the disclosure describes a method that comprises heating a backside of a substrate using a furnace enclosure, wherein a frontside of the substrate is outside the furnace enclosure, wherein the heating of the backside of the substrate with the furnace enclosure heats the frontside of the substrate to a surface temperature by heat conduction from the backside of the substrate to the frontside of the substrate; and depositing an environmental barrier coating (EBC) on the frontside of the substrate via a thermal spray device while the backside of the substrate is heated using the furnace enclosure, wherein the surface temperature of the frontside of the substrate is selected to control at least one of a porosity of the deposited EBC or a weight percent of a crystalline phase in the deposited EBC.

Some examples of the disclosure may allow formation of a desirable EBC system (e.g., in terms of amount of crystalline phase and/or porosity of the deposited layer(s) of the EBC system) while only heating the substrate on the backside during the thermal spraying the EBC system on a substrate, e.g., as compared to the entire thermal spray device being located within a high temperature furnace environment with the substrate.

In some embodiments, heating the backside of the substrate using the furnace enclosure includes heating the backside of the substrate with the furnace enclosure having a furnace temperature of at least 1000 degrees Celsius to 1400 degrees Celsius.

In some embodiments, the surface temperature of the frontside is at least 1000 degrees Celsius while the EBC is deposited on the frontside of the substrate.

In some embodiments, the surface temperature of the frontside is at or above a crystalline transition temperature of the EBC when the EBC is deposited on the frontside of the substrate.

The surface temperature of the frontside of the substrate may be selected to allow for a reduction in porosity, e.g., in the silicon bond coat, and one or more additional EBC layers with relatively high crystalline phase. Such porosity and crystalline phase composition may promote better adhesion between the EBC and CMC, e.g., during the life of the coated substrate.

In some embodiments, the furnace enclosure defines an opening approximately a size and shape of the substrate. The substrate is located in the opening of the furnace enclosure during the backside heating such that the backside of the substrate is inside the furnace enclosure and the frontside of the substrate is outside of the furnace enclosure.

In some embodiments, the frontside of the substrate is not heated by another heating source during the deposition of the EBC on the frontside.

In some embodiments, the deposited EBC includes at least 50 weight percent crystalline phase.

In some embodiments, the method further includes heat treating the deposited EBC at or above a heat treatment temperature for a first period of time following the deposition of the deposited EBC on the substrate.

In some embodiments, the heat-treated EBC includes at least 96 weight percent crystalline phase.

In some examples, the disclosure describes a system that comprises a furnace including a furnace enclosure, wherein the furnace is configured to heat a backside of a substrate using the furnace enclosure while a frontside of the substrate is outside the furnace enclosure; a thermal spray device; and a computing device configured to control the furnace to heat the backside of the substrate using the furnace enclosure to heat the frontside of the substrate to a surface temperature by heat conduction from the backside of the substrate to the frontside of the substrate; and control the thermal spray device to deposit an environmental barrier coating (EBC) on the frontside of the substrate while the backside of the substrate is heated using the furnace enclosure, wherein the surface temperature of the frontside of the substrate is selected to control at least one of a porosity of the deposited EBC or a weight percent of a crystalline phase in the deposited EBC.

In some embodiments, heating the backside of the substrate using the furnace enclosure includes heating the backside of the substrate with the furnace enclosure having a furnace temperature of at least 1000 degrees Celsius to 1400 degrees Celsius.

In some embodiments, the surface temperature of the frontside is at least 1000 degrees Celsius while the EBC is deposited on the frontside of the substrate.

In some embodiments, the surface temperature of the frontside is at or above a crystalline transition temperature of the EBC when the EBC is deposited on the frontside of the substrate.

In some embodiments, the furnace enclosure defines an opening approximately a size and shape of the substrate. The substrate is located in the opening of the furnace enclosure during the backside heating such that the backside of the substrate is inside the furnace enclosure and the frontside of the substrate is outside of the furnace enclosure.

In some embodiments, the frontside of the substrate is not heated by another heating source during the deposition of the EBC on the frontside.

In some embodiments, the deposited EBC includes at least 50 weight percent crystalline phase.

In some embodiments, the computing device is further configured to control the furnace to heat treat the deposited EBC at or above a heat treatment temperature for a first period of time following the deposition of the deposited EBC on the substrate.

In some embodiments, the heat-treated EBC includes at least 96 weight percent crystalline phase.

The details of one or more examples are set forth in the accompanying drawings and the description below. Other features, objects, and advantages will be apparent from the description and drawings, and from the claims.

FIG. 1 is a conceptual and schematic diagram illustrating an example system for forming an EBC on a substrate in accordance with an example of the disclosure.

FIGS. 2A, 2B, 3A, and 3B are conceptual schematic diagrams illustrating the example substrate and furnace of FIG. 1.

FIG. 4 is a flow diagram illustrating an example technique for forming EBC on a substrate.

FIG. 5 is a conceptual and schematic diagram illustrating an example article including an EBC on a substrate.

FIG. 6 is a photograph of an apparatus used for testing to evaluate one or more aspects of some examples of the disclosure.

The disclosure describes systems and techniques for forming an environmental barrier coating (EBC) system using thermal spray deposition, such as air plasma spraying. The EBC coating system may be deposited on a substrate, such as a CMC substrate, that serves as a component of a gas turbine engine or other high temperature system. Thermal spray systems may be used in a wide variety of industrial applications to coat such substrates with EBC systems to modify or improve the properties of underlying substrate or component as a whole. Thermal spray systems may use heat generated electrically, by plasma, or by combustion to heat material injected in a plume, so that molten or softened material propelled by the plume contact the surface of the target. Upon impact, the molten or softened material adheres to the target surface, resulting in a coating.

EBC systems may be an important contributor to the success of CMCs in a high temperature system. For example, the coatings may be configured to protect against oxidation, water vapor recession, and other deleterious reactions from damaging the structural CMC, e.g., during operation of the high temperature system. In some examples, an EBC system may contain a multilayered structure including a silicon-containing bond coat and rare-earth disilicate layer(s). The layers of the EBC system may be deposited using a thermal spraying process, such as, air plasma spraying. The silicon bond coat may be applied to the CMC first to provide proper adhesion between the CMC and the overlaying layers of the EBC system as well as to prevent contaminates from propagating through and attacking the CMC.

In some examples, the bond layer is porous and the EBC system is amorphous in nature upon deposition using thermal spraying. The porous nature of the bond coat may allow for ingress of oxygen through the bond coat to the CMC substrate, which may degrade the structural integrity of the CMC. The amorphous nature of the EBC system may be unstable at high temperatures. As a result, the amorphous EBC system may crystallize when the EBC system is subjected to high temperatures during the life of the component, e.g., during operation of a gas turbine engine or other high temperature system. The crystallization of the EBC system may cause the EBC and/or bond coat to no longer adhere to the CMC and flake off. For example, the transition from amorphous to crystalline structure over time may also result in volumetric changes in the EBC system and, thus, internal stresses in the layer(s). In particular, as the EBC structure changes from amorphous to crystalline, there may be shrinkage in the overall volume. This may cause a build-up in stress in the EBC as well as the silicon bond coat. Eventually, the build-up in stress reaches a threshold and causes a crack to initiate to relieve the stress state.

In some examples, thermal spray systems are configured to be enclosed within a furnace with a substrate to elevate the temperature of the substrate and surrounding environment during the thermal spray deposition of an EBC. However, such systems may be relatively expensive and complicated (e.g., in terms of manufacturability) and the high temperature furnace environment may have deleterious effects on the thermal spray components.

In accordance with examples of the disclosure, systems and techniques are described that include controlling the surface temperature of a substrate frontside during the deposition of an EBC coating system through backside heating of the substrate. The frontside of the substrate may define the surface of the substrate onto which the layer(s) of the EBC system may be deposited via thermal spraying. The temperature of the frontside surface during thermal spraying of the EBC system layer(s) may be controlled by heating the backside of the substrate within a furnace enclosure. By controlling the temperature of the frontside surface of the substrate during thermal spray deposition, the porosity and/or amount of crystalline phase of the deposited layer(s) of the EBC system may be controlled. For example, the weight percent of crystalline phase in the deposited EBC layer(s) of the EBC may be increased compared to instances in which backside substrate heating is not employed. Increasing the weight percent of crystalline phase reduces the internal stresses resulting from transition from amorphous phase to crystal phase during operation of a high temperature system, as less material is available to transition. As another example, the porosity of the deposited EBC layer(s) of the EBC may be decreased compared to instances in which backside substrate heating is not employed. An increase in crystalline phase and/or decrease in porosity of the layer(s) of the deposited EBC system may promote increased adhesion between the deposited EBC system and underlying substrate.

In some examples, the backside of a substrate may be located within the opening of a furnace enclosure with the frontside exposed outside of the furnace enclosure to allow access to the frontside surface for thermal spraying of layer(s) of an EBC system. The furnace enclosure may define a heated internal cavity that directly heats the backside of the substrate and thus indirectly heats the deposition surface of the substrate frontside. By controlling the backside heating using the furnace enclosure, the temperature of the frontside surface of the substrate may also be controlled. The furnace enclosure may be employed to heat the backside of the substrate and heat the backside before, during, and/or after thermal spraying of the layer(s) of the EBC system.

In some examples, the substrate may optionally be heated pre-deposition and/or post-deposition in the same furnace enclosure and/or another furnace, e.g., to further control the microstructure and crystalline phase of the layer(s) of the EBC system. For example, controlling the temperature and/or duration of a post-deposition heat treatment and/or time may allow for a transition from amorphous to crystalline phase in one or more layers of the deposited EBC system as well as tailor the microstructure of the layer(s) of the EBC system.

Some examples of the disclosure may allow for the formation of a desirable EBC system (e.g., in terms of amount of crystalline phase and/or porosity of the deposited layer(s) of the EBC system) while only heating the substrate on the backside during the thermal spraying the EBC system on a substrate, e.g., as compared to the entire thermal spray device being located within a high temperature furnace environment with the substrate. The systems and techniques described herein may include locally controlled heating of the backside of the substrate such that the frontside surface being thermally sprayed is at a desired deposition temperature. The deposition temperature of the substrate frontside surface may be selected to allow for a reduction in porosity, e.g., in the silicon bond coat, and one or more additional EBC layers with relatively high crystalline phase. Such porosity and crystalline phase composition may promote better adhesion between the EBC and CMC, e.g., during the life of the coated substrate.

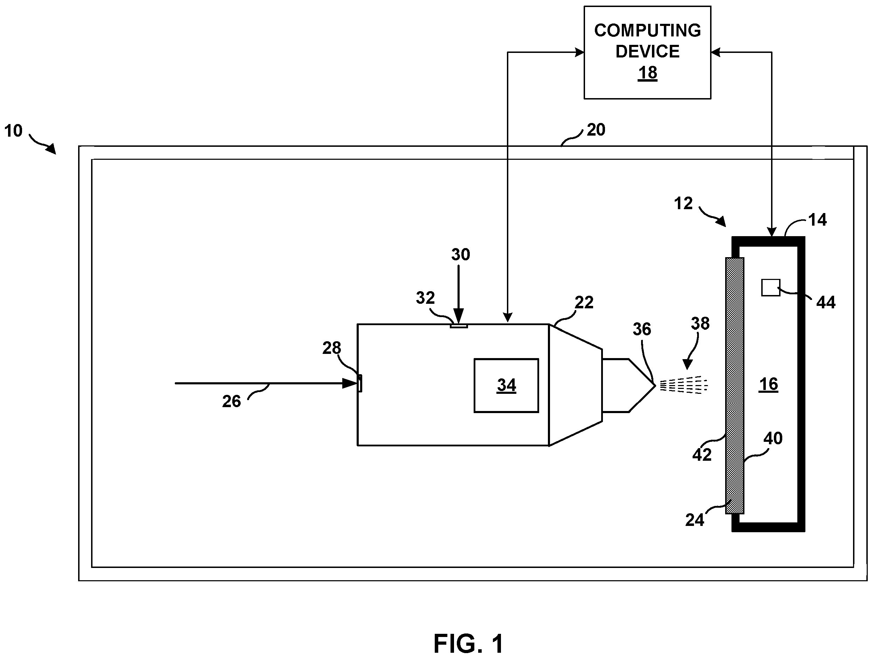

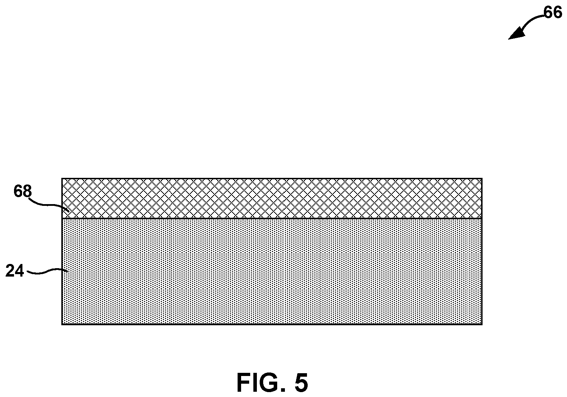

FIG. 1 is a conceptual and schematic diagram illustrating an example thermal spray system 10 for depositing an EBC system on a substrate using a thermal spray process that includes controlled heating of the backside of a substrate during the thermal spray process. Thermal spray system 10 may be configured to deposit one or more layers of a coating system on a substrate to form a coated article, such as article 66 in FIG. 5 which includes EBC system 68 on substrate 24, using a thermal spray process. As will be described below, in one example, thermal spray system 10 may be configured to deposit the one or more layers of a coating system using a plasma spray process, such as an air plasma spray process. In an air plasma spray process, the plasma is sprayed in an air environment, e.g., as compared to a spraying in a vacuum or an inert gas (e.g., argon) environment. For ease of description, the operation of system 10 will primarily be described herein with regard to article 66 of FIG. 5 although other articles formed using system 10 are contemplated.

As shown in FIG. 1, system 10 includes components such as furnace 12, enclosure 20 and a thermal spray device 22. Enclosure 20 encloses some components of thermal spray system 10, including, for example, thermal spray device 22. In some examples, enclosure 20 substantially completely surrounds thermal spray device 22 and encloses an atmosphere. The atmosphere may include, for example, air, an inert atmosphere, a vacuum, or the like. In some examples, the atmosphere may be selected based on the type (e.g., composition) of coating being applied using thermal spray system 10, the type (e.g., composition) of substrate 24, or both. Enclosure 20 also encloses substrate 24 and furnace 12.

Substrate 24 defines a substrate to be coated using thermal spray system 10. In some examples, substrate 24 may include, for example, a substrate on which a bond coat, a primer coat, a hard coat, a wear-resistant coating, a thermal barrier coating, an EBC system, or the like is to be deposited. Substrate 24 may include a substrate or body of any regular or irregular shape, geometry or configuration. In some examples, substrate 24 may include metal, plastic, glass, or the like. Substrate 24 may be a component used in any one or more mechanical systems, including, for example, a high temperature mechanical system such as a gas turbine engine.

Thermal spray device 22 is coupled to a gas feed line 26 via gas inlet port 28, is coupled to a spray material feed line 30 via material inlet port 32, and includes or is coupled to an energy source 124. Gas feed line 26 provides a gas flow to gas inlet port 28 of thermal spray device 22. Depending upon the type of thermal spray process being performed, the gas flow may be a carrier gas for the coating material, may be a fuel that is ignited to at least partially melt the coating material, or both. Gas feed line 26 may be coupled to a gas source (not shown) that is external to enclosure 20.

Thermal spray device 22 also includes a material inlet port 32, which is coupled to spray material feed line 30. Material feed line 30 may be coupled to a material source (not shown) that is located external to enclosure 20. Coating material may be fed through material feed line 30 in powder form, and may mix with gas from gas feed line 26 within thermal spray device 22. The composition of the coating material may be based upon the composition of the coating to be deposited on substrate 24, and may include, for example, a metal, an alloy, a ceramic (e.g., an oxide-based ceramic), or the like.

Thermal spray device 22 also includes energy source 34. Energy source 34 provides energy to at least partially melt the coating material from coating material provided through material inlet port 32. In some examples, energy source 34 includes a plasma electrode, which may energize gas provided through gas feed line 26 to form a plasma. In other examples, energy source 34 includes an electrode that ignites gas provided through gas feed line 26.

As shown in FIG. 1, an exit flow stream 38 exits outlet 36 of thermal spray device 22. In some examples, outlet 36 includes a spray gun nozzle. Exit flow stream 38 may include at least partially melted coating material carried by a carrier gas. Outlet 36 may be configured and positioned to direct the at least partially melted coating material at substrate 24.

Thermal spray system 10 also include furnace 12. As shown in FIG. 1, furnace 12 includes an outer furnace enclosure 14 that defines internal cavity 16 that is heated during operation of furnace 12. Backside 40 of substrate 24 is exposed to internal cavity 16 of furnace enclosure 14 to allow for direct heating of backside 40 of substrate 24 by furnace enclosure 14 by radiation, convection, conduction, or combinations thereof. The heating of backside 40 of substrate 24 heats frontside surface 42 of substrate 24 by conduction of heat through a thickness of substrate 24. By controlling the heating of backside 40 of substrate 24, the temperature of frontside surface 42 may be controlled, e.g., during deposition of one or more layers of EBC system 68 of article 66. As will be described further below, the temperature of frontside surface 42 may be controlled by controlling the heating of backside 40 to control, e.g., increase, the amount of crystalline phase in the one or more layers of EBC system 68 deposited on frontside surface 42 by thermal spray system 10. The porosity of the one or more deposited layers of EBC system 68 may additionally or alternatively controlled, e.g., decreased, by controlling the temperature of frontside surface 42 via heating of backside 40 of substrate 24 during the deposition process.

Furnace 14 may be any suitable furnace, such that it can achieve the target crystallization temperature. Furnace 14 includes a heat source that allows for the controlled heating of furnace enclosure 16. Heat source 14 may include one or more suitable heat sources such as moly-disilicide and/or carbide heating elements, although other types of heat sources are contemplated. Furnace 14 may include temperature sensor 44, which senses the temperature within furnace enclosure 16, e.g., to provide feedback to computing device 18 or another controller that controls the temperature of furnace enclosure 16. Additionally, or alternatively, system 10 may include one or more sensors like temperature sensor 14 configured to sense the temperature of backside 40 and/or frontside surface 42 of substrate, e.g., to control the temperature of frontside 42 during thermal deposition of coating 66 by thermal spray system 10.

Computing device 18 may be configured as a control device that controls thermal spray system 10 to operate in the manner described herein. Computing device 18 may be configured to control operation of one or more components of thermal spray system 10 automatically or under control of a user. For example, computing device 18 may be configured to control operation of thermal spray device 22, gas feed line 26 (and the source of gas to gas feed line 26), material feed line 30 (and the source of material to material feed line 30), and the like. For example, computing device 18 may be configured to control at least one of a temperature, a pressure, a mass flow rate, a volumetric flow rate, a molecular flow rate, a molar flow rate, a composition or a concentration, of a flow stream flowing through thermal spray system 12, for instance, of gas flowing through gas feed line 26, or of exit flow stream 38, or of material flowing through material feed line 30.

Computing device 18 may be communicatively coupled to the components of thermal spray device 22 and furnace 14 using respective communication connections. Such connections may be wireless and/or wired connections. While computing device 18 is shown as a single device, in other examples, computing device 18 may be more than one computing device, such as, e.g., where each of furnace 14 and thermal spray device 22 are controlled by different computing devices.

In some examples, computing device 18 may be configured to control the temperature of furnace 12, e.g., before, during, and/or after the deposition of EBC system 68 on substrate 24. As described herein, the heating of backside 40 with furnace enclosure 14 may heat frontside 42 of substrate 24. During the deposition of one or more layers of EBC system 68, frontside 42 may be heated via heating of backside 40. By controlling the temperature of frontside 42 during the deposition of the one or more layers of EBC system 68, the amount of crystalline phase and/or porosity of the one or more layers of EBC system 68 may be controlled. For example, the temperature of frontside 42 may be controlled by heating of backside 40 to provide for a relatively high amount of crystalline phase (e.g., at least about 50 wt%, at least about 70 wt%, or at least about 90 wt% crystalline phase) in the one or more layers of EBC system 68 and/or a relatively low porosity (e.g., less than about 10% porosity, such as less than about 5% porosity, about 1% to about 10% porosity, about 1% to about 5% porosity, or substantially no pores) in the one or more layers of EBC system 68.

Computing device 18 may include, for example, a desktop computer, a laptop computer, a workstation, a server, a mainframe, a cloud computing system, or the like. Computing device 18 may include or may be one or more processors or processing circuitry, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor" and "processing circuitry" as used herein may refer to any of the foregoing structure or any other structure suitable for implementation of the techniques described herein. In addition, in some examples, the functionality of computing device 18 may be provided within dedicated hardware and/or software modules.

In some examples, thermal spray device may include a stage or other component configured to selectively position and restrain substrate 24 and/or furnace 14 in place during formation of coating 66. In some examples, the stage or other component is movable relative to thermal spray device 22. For example, in this manner, substrate 24 may be translatable and/or rotatable along at least one axis to position substrate 24 relative to plasma spray device 22. Similarly, in some examples, thermal spray device 22 may be movable relative to substrate 24 to position thermal spray device 22 relative to substrate 24.

In one example, system 10 may be configured to form an article such as article 66 shown in FIG. 5, which includes EBC system 68 deposited on substrate 24. For example, system 10 may be configured to deposit one or more layers of EBC system 68 on substrate 24 using thermal spray device 22, e.g., by air plasma spraying or other thermal spray deposition process. Before, during, and/or after the deposition of the one or more layers of EBC system 68, backside 40 of substrate 24 may be heated via furnace enclosure 16 to heat frontside surface 42 onto which the one or more layer is deposited. Computing device 18 may also control the heating of backside 40 via furnace enclosure 16 to control the temperature of frontside 42 before, during, and/or after the deposition of the one or more layers. In some examples, the heated temperature of frontside 42 is controlled by computing device 18 to provide for an increase in the amount of crystalline phase to amorphous phase in EBC system 68, e.g., as compared to an article in which the EBC system is deposited by thermal spray device 12 without such heating. In some examples, the heated temperature of frontside 42 is controlled by computing device 18 to provide for a decrease in the porosity of the one or more layers of EBC system 68, e.g., as compared to an article in which the EBC system is deposited by thermal spray device 12 without such heating.

In some examples, enclosure 20 may be heated separately from that of furnace 12, e.g., to provide a heated environment within enclosure 20. The temperature within enclosure 20 may be controlled by computing device 18. In other examples, enclosure 20 may not be separately heated, e.g., such that enclosure 20 is at room temperature or otherwise not heated by a heating source during the spraying process with only furnace enclosure 16 heating backside 40 of substrate 24 during the spraying process. For example, the only heat source that heats enclosure 20 may be heat from furnace 12 that heat backside 40, the heat from the deposited coating material of EBC system 68, and/or heat from the operation of thermal spray device 22. In such cases, frontside 42 of substrate 24 is only heated through the heating of backside 40 of substrate 24 by furnace enclosure 16, aside from incidental heat transfer from the plume and coating material deposited on frontside 42. In such an example, the relative cost and ease of manufacturing article 66 may be reduced by not requiring thermal spray device 22 and associated components to be contained within a furnace during the thermal spray deposition of EBC system 68 on substrate 24. Rather, in such examples, substrate 24 is only subject to heating through the heating of backside 40 via furnace enclosure 16.

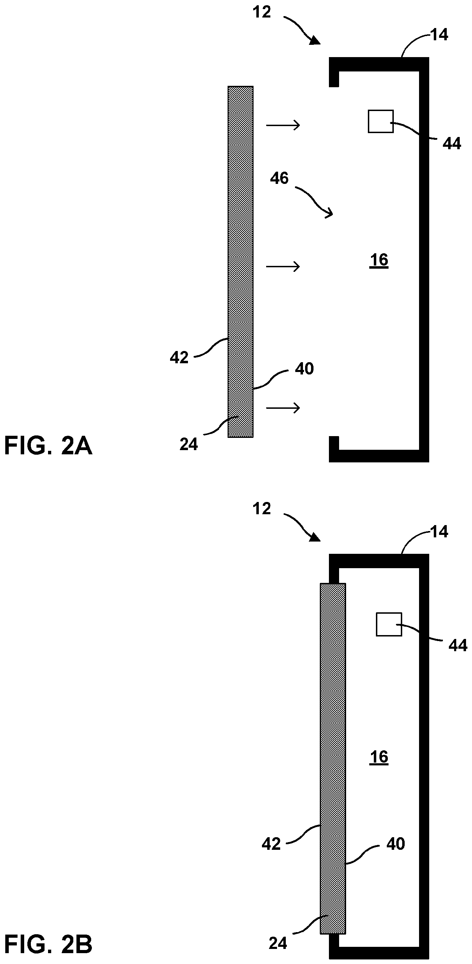

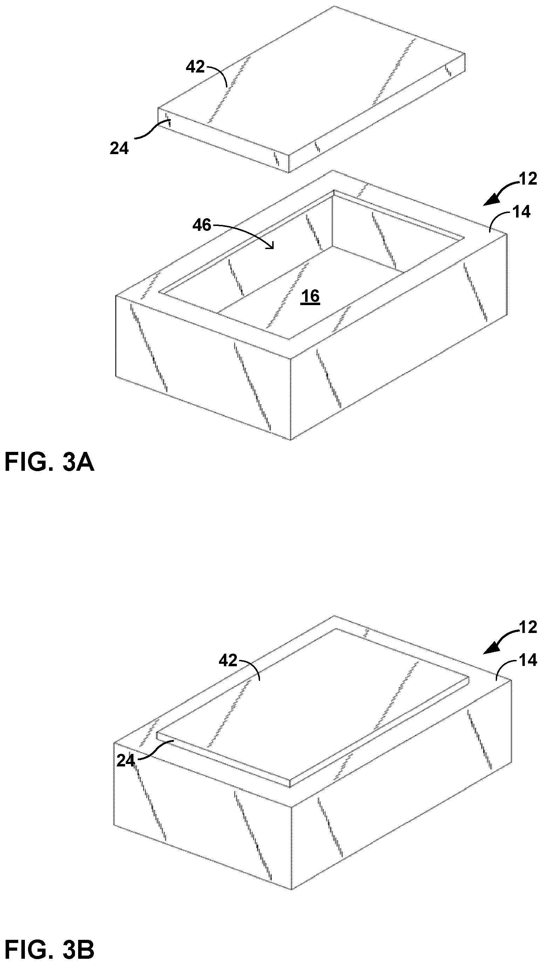

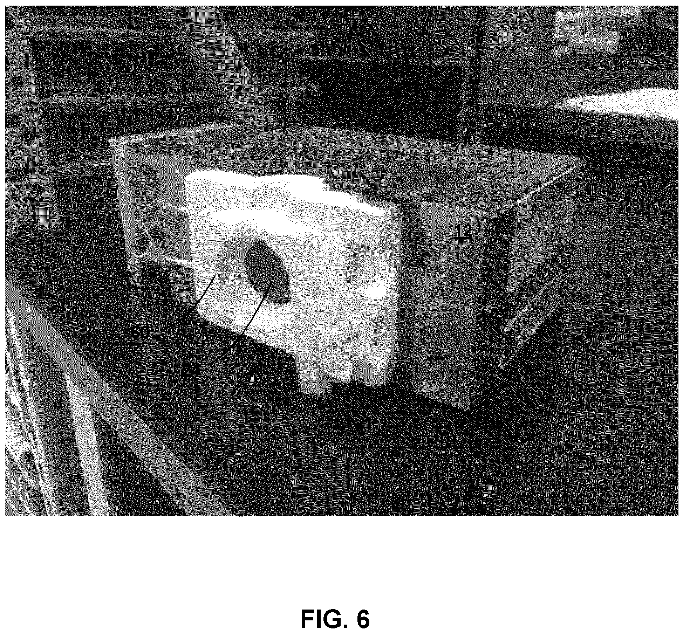

FIGS. 2A and 2B are conceptual schematic diagrams illustrating cross-sections of furnace 12 and substrate 24 in exploded and assembled views, respectively. FIGS. 3A and 3B are conceptual schematic diagrams illustrating views of furnace 12 and substrate 24 corresponding to FIGS. 2A and 2B, respectively. As shown, furnace 12 include five sides defining enclosure 16 with opening 46. Substrate 24 may be located over opening 46 of furnace 12 such that the heating of furnace enclosure 16 heats backside 40 of substrate 24 with frontside 42 not being located within furnace enclosure 16. In some example, substrate 24 may be closely fit (e.g., interference fit) within opening 46 using an insulating material to releasably secure substrate 24 within opening 24 during thermal spraying, e.g., like that shown in FIG. 6. Depending on the design of a component, different mechanisms for holding cooler parts of substrate 24 or other insulated holding mechanisms may be employed.

In some examples, like that shown in FIGS. 2B and 3B, substrate 24 has a size and shape that is substantially the same (e.g., the same or nearly the same) size and shape of opening 46 such that substrate 24 substantially covers opening 46 on all sides. In FIGS. 2B and 3B, substrate 24 and opening 46 each have a rectangular shape of approximately the same size. In other examples, substrate 24 may have a size and/or shape different from that of the size and/or shape of opening 46. For example, substrate 24 may be larger than opening 46. In such examples, substrate 24 may be positioned to cover opening 24 with a portion of backside 40 and another portion overlapping the perimeter of opening 24. The portion of backside 40 that covers opening 46 may be directly heated by furnace enclosure 16 to heat frontside 42 of substrate 24, e.g., during the thermal spraying of one or more layers of EBC system 68.

FIG. 5 is a conceptual schematic diagram illustrating article 66 that may be formed using system 10 of FIG. 1. In some examples, article 66 may include a component of a gas turbine engine. For example, article 66 may include a part that forms a portion of a flow path structure, a seal segment, a blade track, an airfoil, a blade, a vane, a combustion chamber liner, or another portion of a gas turbine engine.

As described herein, article 66 includes EBC system 68 formed on substrate 24. EBC system 68 may be a single layer or multi-layer coating, where each layer has substantially the same or different compositions. As used herein, "formed on" and "on" mean a layer or coating that is formed on top of another layer or coating, and encompasses both a first layer or coating formed immediately adjacent a second layer or coating and a first layer or coating formed on top of a second layer or coating with one or more intermediate layers or coatings present between the first and second layers or coatings. In contrast, "formed directly on" and "directly on" denote a layer or coating that is formed immediately adjacent another layer or coating, e.g., there are no intermediate layers or coatings.

Substrate 24 may include a material suitable for use in a high-temperature environment. In some examples, substrate 24 may include a ceramic or a ceramic matrix composite (CMC). Suitable ceramic materials, may include, for example, a silicon-containing ceramic, such as silica (SiO₂) and/or silicon carbide (SiC); silicon nitride (Si₃N₄); alumina (Al₂O₃); an aluminosilicate; a transition metal carbide (e.g., WC, Mo₂C, TiC); a silicide (e.g., MoSi₂, NbSi₂, TiSi₂); combinations thereof; or the like. In some examples in which substrate 24 includes a ceramic, the ceramic may be substantially homogeneous.

In examples in which substrate 24 includes a CMC, substrate 24 may include a matrix material and a reinforcement material. The matrix material may include, for example, silicon metal or a ceramic material, such as silicon carbide (SiC), silicon nitride (Si₃N₄), an aluminosilicate, silica (SiO₂), a transition metal carbide or silicide (e.g., WC, Mo₂C, TiC, MoSi₂, NbSi₂, TiSi₂), or another ceramic material. The CMC may further include a continuous or discontinuous reinforcement material. For example, the reinforcement material may include discontinuous whiskers, platelets, fibers, or particulates. Additionally, or alternatively, the reinforcement material may include a continuous monofilament or multifilament two-dimensional or three-dimensional weave, braid, fabric, or the like. In some examples, the reinforcement material may include carbon (C), silicon carbide (SiC), silicon nitride (Si₃N₄), an aluminosilicate, silica (SiO₂), a transition metal carbide or silicide (e.g. WC, Mo₂C, TiC, MoSi₂, NbSi₂, TiSi₂), or the like.

Substrate 24 may be manufactured using one or more techniques including, for example, chemical vapor deposition (CVD), chemical vapor infiltration (CVI), polymer impregnation and pyrolysis (PIP), slurry infiltration, melt infiltration (MI), combinations thereof, or other techniques.

EBC system 68 may help protect underlying substrate 24 from chemical species present in the environment in which article 66 is used, such as, e.g., water vapor, calcia-magnesia-alumina-silicate (CMAS; a contaminant that may be present in intake gases of gas turbine engines), or the like. Similarly, the EBC system may also be CMAS resistant, e.g., the EBC system itself may be resistant to damage caused by CMAS. Similarly, EBC system 66 may also be CMAS resistant, e.g., the EBC system itself may be resistant to damage caused by CMAS. Additionally, in some examples, EBC system 68 may also protect substrate 24 and provide for other functions besides that of an EBC, e.g., by functioning as a thermal barrier coating (TBC), abradable coating, erosion resistant coating, and/or the like.

Although not directly shown in FIG. 5, in some examples, article 66 may include a bond coat (e.g., a silicon bond coat) between one or more overlaying layers of EBC system 68 and substrate 24, e.g., where the bond coat is directly on substrate 24 and the overlaying layer(s) of EBC system 68 are directly on the bond coat. The bond coat may increase the adhesion between substrate 24 and EBC system 68. In some examples, the bond coat has a thickness of approximately 25 microns to approximately 250 microns, although other thicknesses are contemplated. In examples in which substrate 24 includes a ceramic or CMC, the bond coat may include a ceramic or another material that is compatible with the material from which substrate 24 is formed. For example, the bond coat may include mullite (aluminum silicate, Al₆Si₂O₁₃), silicon metal or alloy, silica, a silicide, or the like. The bond coat may further include other elements, such as a rare earth silicate including a silicate of lutetium (Lu), ytterbium (Yb), thulium (Tm), erbium (Er), holmium (Ho), dysprosium (Dy), gadolinium (Gd), terbium (Tb), europium (Eu), samarium (Sm), promethium (Pm), neodymium (Nd), praseodymium (Pr), cerium (Ce), lanthanum (La), yttrium (Y), and/or scandium (Sc).

EBC system 68 may include one or more EBC layers, which may be configured to help protect substrate 24 against deleterious environmental species, such as CMAS and/or water vapor. The layer(s) of EBC system 68 may include at least one of a rare-earth oxide, a rare-earth silicate, an aluminosilicate, or an alkaline earth aluminosilicate. For example, the layer(s) of EBC system 68 may include mullite, barium strontium aluminosilicate (BSAS), barium aluminosilicate (BAS), strontium aluminosilicate (SAS), at least one rare-earth oxide, at least one rare-earth monosilicate (RE₂SiO₅, where RE is a rare-earth element), at least one rare-earth disilicate (RE₂Si₂O₇, where RE is a rare-earth element), or combinations thereof. The rare-earth element in the at least one rare-earth oxide, the at least one rare-earth monosilicate, or the at least one rare-earth disilicate may include at least one of lutetium (Lu), ytterbium (Yb), thulium (Tm), erbium (Er), holmium (Ho), dysprosium (Dy), gadolinium (Gd), terbium (Tb), europium (Eu), samarium (Sm), promethium (Pm), neodymium (Nd), praseodymium (Pr), cerium (Ce), lanthanum (La), yttrium (Y), or scandium (Sc). EBC system 68 may be any suitable thickness. For example, EBC system 68 may be about 0.005 inches (about 127 micrometers) to about 0.100 inches (about 2540 micrometers). Other thicknesses are contemplated.

In some examples, the layer(s) of EBC system 68 additionally and optionally may include at least one additive, such as at least one of silica, a rare earth oxide, alumina, an aluminosilicate, an alkali metal oxide, an alkaline earth metal oxide, an alkali metal aluminosilicate, an alkaline earth aluminosilicate, TiO₂, Ta₂O₅, HfSiO₄, or the like. The additive may be added to the EBC to modify one or more desired properties of the EBC. For example, the additive components may increase or decrease the reaction rate of the EBC with calcia-magnesia-alumina-silicate (CMAS; a contaminant that may be present in intake gases of gas turbine engines), may modify the viscosity of the reaction product from the reaction of CMAS and constituent(s) of the EBC, may increase adhesion of the EBC to the bond coat, may increase the chemical stability of the EBC, or the like.

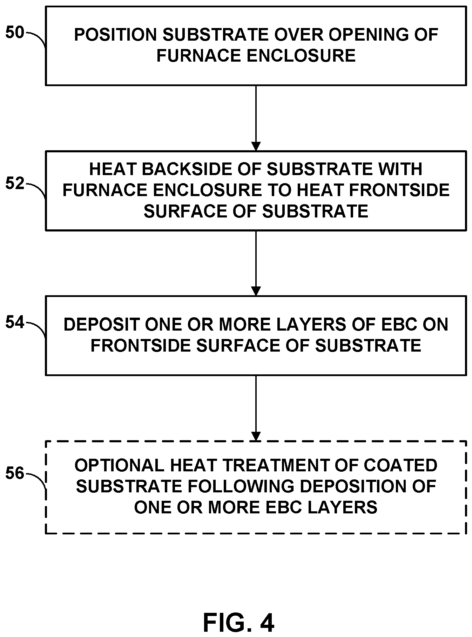

FIG. 4 is a flow diagram illustrating an example technique for forming a coating that includes an environmental barrier coating on a substrate using a thermal spray process. The technique of FIG. 4 will be described with respect to system 10 of FIG. 1 and article 66 of FIG. 5 for ease of description only. A person having ordinary skill in the art will recognize and appreciate that the technique of FIG. 4 may be implemented using systems other than system 10 of FIG. 1, may be used to form articles other than article 68 of FIG. 5, or both.

As shown in FIG. 5, substrate 24 may be positioned over opening 46 of furnace enclosure 16, e.g., manually or by a robotic device under the control of computing device 18 (50). When positioned over opening 46, at least a portion of backside 40 is covering opening 46 with frontside outside of opening 46. In some examples, substrate 24 is positioned over opening 46 such that substrate 24 is also positioned for deposition of one or more layers of EBC system 68 by thermal spray device 22. In other examples, furnace 12 and substrate 24 may need to be repositioned relative to thermal spray device 22 after substrate 24 is located over opening 46 before deposition of the one or more layer of EBC system 68 by thermal spraying.

Once substrate 24 is positioned over opening 46, backside 40 may be heated by furnace enclosure 16 under the control of computing device 18 to heat frontside 42 of substrate 24 (52). In some examples, computing device 18 may heat furnace enclosure 16 so that furnace enclosure 16, backside 40, and/or frontside 42 reaches a desired temperature, as measured by temperature sensor 44. The temperature of furnace enclosure 16, backside 40, and/or frontside 42 may be selected such that the temperate of frontside 42 of substrate 24 is elevated above the ambient temperature of the environment external to furnace 12, e.g., the ambient temperature within enclosure 20 outside of furnace 12.

In some examples, computing device 18 may heat furnace enclosure 16 to a temperature sufficient to heat frontside 42 of substrate 24 via direct heating of backside 40 to a desired elevated temperature. In some examples, furnace enclosure 16 heats backside 40 such that frontside 42 has a temperature of at least about 1000 degrees C, such as, about 1000 degrees C to 1200 degrees C. In some examples, the temperature of backside 40 is heated to a temperature of about 1400 degrees C or less by furnace enclosure 16, e.g., about 1000 degrees C to about 1400 degrees C.

Once furnace enclosure 16, backside 40, and/or frontside 42 reaches the desired temperature(s) during the heating process, computing device 18 may control thermal spray device 22 and associated components of thermal spray system 10 to deposit one or more layers of EBC system 68 on substrate 24 to form article 22. Backside 40 may be heated by furnace enclosure 16 while the material for the one or more layers is being deposited by spray gun 22 to keep frontside 42 at an elevated or desired temperature. By elevating the temperature of frontside 42 via backside heating of substrate 24, the amount of crystalline phase in the deposited layer(s) may be increased (e.g., compared to instances in which frontside 42 is not heated) or otherwise tailored. For example, when a particle is sprayed as a plasma from spray gun 22, the particle may be in an amorphous phase in air. If the particle hits a relatively cold surface, the particle solidifies relatively quickly, trapping it in the amorphous state. Conversely, if the substrate is relatively hot (e.g., via backside heating), then the particle has time to crystallize (e.g., which is a preferred lower energy state). This may also give the particle the opportunity to stay somewhat fluid, allowing for better infiltration and fewer pores.

The temperature of frontside 42 during the deposition of the one or more layers of EBC system 10 may be selected to control at least one of the porosity of the deposited layer(s) or the amount of crystalline phase in the deposited layer(s) of EBC system 42. For example, the porosity of the one or more deposited layers may be less than that of similar layers deposited using the same process but without heating backside 40 of substrate 24 as described herein. In some example, the temperature of frontside 42 during deposition may be selected to provide the one or more layers of EBC system 68 with a porosity of, e.g., less than about 10% porosity, such as less than about 5% porosity, about 1% to about 10% porosity, about 1% to about 5% porosity, or substantially no pores. An EBC system with a relatively low porosity (e.g., less than about 10% porosity, such as less than about 5% porosity, about 1% to about 10% porosity, about 1% to about 5% porosity, or substantially no pores) may be preferred as it may result in improved protection of substrate 24 from the environment during high temperature operation.

As another example, the amount (e.g., weight percent) of crystalline phase in the one or more deposited layers may be more than that of similar layers deposited using the same process but without heating backside 40 of substrate 24 as described herein. As noted above, without heating backside 40, EBC system 68 may have relatively high amount of amorphous phase. The amorphous phase may change to a crystalline structure over time when subjected to higher temperatures, e.g., during operation of a jet engine. An uncontrolled transition from amorphous to crystalline structure with time may also result in volumetric changes and, thus, internal stresses in the layer(s). By heating backside 40 of substrate 24, the amount of amorphous phase in EBC system 68 may be decreased and the amount of crystalline phase may be increased. In some examples, the one or more deposited layers may have a crystalline phase of greater than about 50 wt%, such as, greater than about 60 wt%, greater than about 70 wt%, greater than about 80 wt%, greater than about 90 wt%, about 50 wt% to about 96 wt% or greater than about 96 wt% or about 100 wt%. The remainder of the layer composition may be amorphous phase in some examples. Other values are contemplated.

As shown in FIG. 4, in some examples, article 24 may undergo an optional post-deposition heat treatment after the one or more layers of EBC system 68 are deposited (56). For instance, in some examples, when EBC system 68 is deposited, the layer(s) of system 68 may still have an undesirable amount of amorphous phase in the one or more layers, e.g., due to the high cooling rates/quenching of the particles upon impact with substrate 24.

As such, in some examples, following deposition of EBC system 68 on substrate 24, article 66 may be heat treated by furnace 12 and/or transferred to another furnace by robotic transfer device for a post-deposition heat treatment (56). In some examples, the post-deposition heat treatment may take place before or after article 66 cools to room temperature following deposition. The post-deposition heat treatment temperature and duration may be controlled by computing device 18 and may be selected to increase the crystalline phase concentration of EBC system 68 on substrate 24, e.g., compared to that of the as-deposited layer from the thermal spraying. For example, furnace enclosure 16 may be at a treatment temperature of at or above the crystalline transition temperature (e.g., the temperature of the transition between amorphous phase and crystalline phase and/or temperature of the transition between different crystalline phases) of the layer(s) of EBC system 68. Additionally, or alternatively, the post-deposition heat treatment may reduce the porosity of one or more layer of EBC system 68.

In some examples, furnace enclosure 14 may be at a treatment temperature of at least about 1000 degrees C, such as, e.g., about 1000 degrees C to about 1200 degrees C, or less than about 1400 degrees C. Computing device 18 may control furnace 12 to hold a substantially constant heat treatment temperature within furnace or a heat treatment temperature that varies within a prescribed range over a selected period of time. In some examples, during the post-deposition heat treatment, frontside 42 of substrate 24 may have a temperature of at least about 1000 degrees C, such as, e.g., about 1000 degrees C to about 1200 degrees C, or less than about 1400 degrees C.

In some examples, the heat treatment may be controlled such that EBC system 68 reaches a temperature at or above the crystalline phase temperature of the one or more layers of EBC system 68. In some examples, depending on the composition of the layer(s), the layer(s) of EBC system 68 may have a temperature of at least about 1000 degrees C, such as, e.g., about 1000 degrees C to about 1200 degrees C, or less than about 1400 degrees C. Values other than that described above are contemplated.

Following the post-deposition cooling, article 66 may undergo a controlled cooling from that of the heat treatment temperature, e.g., by cooling furnace enclosure 14 or by cooling article 66 within another furnace. For example, computing device 18 may control the rate of cooling of furnace enclosure 14 over a particle period of time such that article 66 cools at a controlled rate over the period of time, as compared to simply removing article 66 from opening 46 of furnace enclosure 14 and or simply turning off furnace enclosure 14 while article 66 is positioned over opening 46. By controlling the cooling of article 66 for a period of time following the heat treatment, the crystalline phase amount in the deposited may be further tailored, e.g., increased in amount compared to an instance in which article 66 is cooled by removing article 66 from the furnace used for the post-deposition heat treatment.

In some examples, computing device 18 may control the cooling of article 68 such that the temperature of EBC layer 68 cools at a rate of about 10 degrees C/minute or less, such as, about 5 degrees C/minute or less, until article 66 is cooled to about 1000 degrees C, followed by further cooling at a rate up to about 50 degrees C/minute until article 66 reaches about 500 degree C or is approximately equal to room temperature.

In some examples, the post deposition heat treatment and/or controlled cooling of article 66 within furnace 14 may be selected to increase the crystalline phase concentration and/or decrease the amorphous phase concentration within EBC system 68 compared to that of the amorphous and crystalline phase content of EBC system 68 following deposition by thermal spray device 14 but before the heat treatment and/or controlled cooling In some examples, the heat treatment and/or cooling of article 66 within furnace 14 may be selected to increase the crystalline phase concentration and/or decrease the amorphous phase concentration within EBC system 68 compared to that of the amorphous and crystalline phase content of EBC system 68 following deposition by thermal spray device 14 but without any post-deposition heat treatment and/or controlled cooling. In some examples, increasing the crystalline phase content of the layer(s) of EBC system 68 may increase the bond strength of EBC system 68, e.g., by a factor of approximately two compared to other coating systems with higher amorphous phase content, and/or increase the thermal cycling stability of EBC system 68.

In some examples, EBC system 68 may have a crystalline phase of greater than about 50 wt%, such as, greater than about 60 wt%, greater than about 70 wt%, greater than about 80 wt%, greater than about 90 wt%, about 50 wt% to about 96 wt% or greater than about 96 wt% or about 100 wt% following the heat treatment describe above and/or the controller cooling described above with the remainder, e.g., being substantially all amorphous phase. Other values are contemplated.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in a computer system-readable medium, such as a computer system-readable storage medium, containing instructions. Instructions embedded or encoded in a computer system-readable medium, including a computer system-readable storage medium, may cause one or more programmable processors, or other processors, to implement one or more of the techniques described herein, such as when instructions included or encoded in the computer system-readable medium are executed by the one or more processors. Computer system readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer system readable media. In some examples, an article of manufacture may comprise one or more computer system-readable storage media.

### EXAMPLE

A test was carried out to evaluate one or more aspects of the present disclosure. However, the disclosure is not limited by the testing or the corresponding description.

An open furnace was modified with thermally insulating holder configured to hold a SiC/SiC CMC substrate over the furnace opening near the heating element. FIG. 6 is a photograph showing the furnace 12, insulating holder 60, and substrate 24. During the test, the heating elements were taken up to about 1300 degrees C. A pyrometer was used to measure the temperature of the frontside surface of substrate 24, e.g., the surface that would be thermally sprayed (e.g., plasma sprayed) with one or more layers of an EBC system. The surface temperature reached about 980 degrees C with the 1300 degree C furnace set point. Thus, it was determined that the backside heating of substrate 24 with furnace 12 was capable of heating the frontside of substrate 24 to a desired temperature, in some examples.

Various examples have been described. These and other examples are within the scope of the following claims.

## Claims

1. A method comprising:
heating (52) a backside (40) of a substrate (24) using a furnace enclosure (14), wherein a frontside (42) of the substrate (24) is outside the furnace enclosure (14), wherein the heating of the backside (40) of the substrate (24) with the furnace enclosure (14) heats the frontside (42) of the substrate (24) to a surface temperature by heat conduction from the backside (40) of the substrate (24) to the frontside (42) of the substrate (24); and
depositing (54) an environmental barrier coating (EBC) (68) on the frontside (42) of the substrate (24) via a thermal spray device (22) while the backside (40) of the substrate (24) is heated using the furnace enclosure (14), wherein the surface temperature of the frontside (42) of the substrate (24) is selected to control at least one of a porosity of the deposited EBC (68) or a weight percent of a crystalline phase in the deposited EBC (68).

2. The method of claim 1, wherein heating the backside (40) of the substrate (24) using the furnace enclosure (14) comprises heating the backside (40) of the substrate (24) with the furnace enclosure (14) having a furnace temperature of at least 1000 degrees Celsius to 1400 degrees Celsius.

3. The method of claim 1, wherein the surface temperature of the frontside (42) is at least 1000 degrees Celsius while the EBC (68) is deposited on the frontside (42) of the substrate (24).

4. The method of claim 1, wherein the surface temperature of the frontside (42) is at or above a crystalline transition temperature of the EBC (68) when the EBC (68) is deposited on the frontside (42) of the substrate (24).

5. The method of any one of claims 1 to 4, wherein the furnace enclosure (14) defines an opening (46) approximately a size and shape of the substrate (24), wherein the substrate (24) is located in the opening (46) of the furnace enclosure (14) during the backside heating such that the backside (40) of the substrate (24) is inside the furnace enclosure (14) and the frontside (42) of the substrate (24) is outside of the furnace enclosure (14).

6. The method of any one of claims 1 to 5, wherein the frontside (42) of the substrate (24) is not heated by another heating source during the deposition of the EBC (68) on the frontside (42).

7. The method of any one of claims 1 to 6, wherein the deposited EBC (68) includes at least 50 weight percent crystalline phase.

8. The method of any one of claims 1 to 7, further comprising heat treating (56) the deposited EBC (68) at or above a heat treatment temperature for a first period of time following the deposition of the deposited EBC (68) on the substrate (24).

9. The method of claim 8, wherein the heat-treated EBC (68) includes at least 96 weight percent crystalline phase.

10. A system (10) comprising:
a furnace (12) including a furnace enclosure (14), wherein the furnace (12) is configured to heat a backside (40) of a substrate (24) using the furnace enclosure (14) while a frontside (42) of the substrate (24) is outside the furnace enclosure (14);
a thermal spray device (22); and
a computing device (18) configured to control the furnace (12) to heat the backside (40) of the substrate (24) using the furnace enclosure (14) to heat the frontside (42) of the substrate (24) to a surface temperature by heat conduction from the backside (40) of the substrate (24) to the frontside (42) of the substrate (24); and control the thermal spray device (22) to deposit an environmental barrier coating (EBC) (68) on the frontside (42) of the substrate (24) while the backside (40) of the substrate (24) is heated using the furnace enclosure (14), wherein the surface temperature of the frontside (42) of the substrate (24) is selected to control at least one of a porosity of the deposited EBC (68) or a weight percent of a crystalline phase in the deposited EBC (68).

11. The system (10) of claim 10, wherein heating the backside (40) of the substrate (24) using the furnace enclosure (14) comprises heating the backside (40) of the substrate (24) with the furnace enclosure (14) having a furnace temperature of at least 1000 degrees Celsius to 1400 degrees Celsius.
s

12. The system (10) of claim 10, wherein the surface temperature of the frontside (42) is at least 1000 degrees Celsius while the EBC (68) is deposited on the frontside (42) of the substrate (24).

13. The system (10) of claim 10, wherein the surface temperature of the frontside (42) is at or above a crystalline transition temperature of the EBC (68) when the EBC (68) is deposited on the frontside (42) of the substrate (24).

14. The system (10) of any one of claims 10 to 13, wherein the furnace enclosure (14) defines an opening (46) approximately a size and shape of the substrate (24), wherein the substrate (24) is located in the opening (46) of the furnace enclosure (14) during the backside heating such that the backside (40) of the substrate (24) is inside the furnace enclosure (14) and the frontside (42) of the substrate (24) is outside of the furnace enclosure (14).

## Patentansprüche

1. Verfahren, umfassend:
Erhitzen (52) einer Rückseite (40) eines Substrats (24) unter Verwendung eines Ofengehäuses (14), wobei eine Vorderseite (42) des Substrats (24) außerhalb des Ofengehäuses (14) liegt, wobei das Erhitzen der Rückseite (40) des Substrats (24) mit dem Ofengehäuse (14) die Vorderseite (42) des Substrats (24) durch Wärmeleitung von der Rückseite (40) des Substrats (24) zu der Vorderseite (42) des Substrats (24) erhitzt; und
Abscheiden (54) eines Enviromental Barrier Coating (EBC) (68) über eine thermische Spritzvorrichtung (22) auf die Vorderseite (42) des Substrats (24), während die Rückseite (40) des Substrats (24) unter Verwendung des Ofengehäuses (14) erhitzt wird, wobei die Oberflächentemperatur der Vorderseite (42) des Substrats (24) so ausgewählt wird, um mindestens eines der folgenden zu regeln: eine Porosität des abgeschiedenen EBC (68) oder einen prozentualen Gewichtsanteil einer kristallinen Phase in dem abgeschiedenen EBC (68).

2. Verfahren nach Anspruch 1, wobei das Erhitzen der Rückseite (40) des Substrats (24) unter Verwendung des Ofengehäuses (14) das Erhitzen der Rückseite (40) des Substrats (24) umfasst, wobei das Ofengehäuse (14) eine Ofentemperatur von mindestens 1.000 Grad Celsius bis 1.400 Grad Celsius aufweist.

3. Verfahren nach Anspruch 1, wobei die Oberflächentemperatur der Vorderseite (42) mindestens 1.000 Grad Celsius beträgt, während das EBC (68) auf die Vorderseite (42) des Substrats (24) abgeschieden wird.

4. Verfahren nach Anspruch 1, wobei die Oberflächentemperatur der Vorderseite (42) größer oder gleich einer kristallinen Übergangstemperatur des EBC (68) ist, wenn das EBC (68) auf die Vorderseite (42) des Substrats (24) abgeschieden wird.

5. Verfahren nach einem der Ansprüche 1 bis 4, wobei das Ofengehäuse (14) eine Öffnung (46) definiert, die ungefähr eine Größe und Form des Substrats (24) aufweist, wobei sich das Substrat (24) während dem Erhitzen der Rückseite in der Öffnung (46) des Ofengehäuses (14) befindet, so dass sich die Rückseite (40) des Substrats (24) in dem Ofengehäuse (14) befindet und sich die Vorderseite (42) des Substrats (24) außerhalb des Ofengehäuses (14) befindet.

6. Verfahren nach einem der Ansprüche 1 bis 5, wobei die Vorderseite (42) des Substrats (24) während der Abscheidung des EBC (68) auf die Vorderseite (42) durch keine weitere Heizquelle erhitzt wird.

7. Verfahren nach einem der Ansprüche 1 bis 6, wobei das abgeschiedene EBC (68) mindestens 50 Gewichtsprozent der kristallinen Phase umfasst.

8. Verfahren nach einem der Ansprüche 1 bis 7, das ferner eine Hitzebehandlung (56) des abgeschiedenen EBC (68) über einen ersten Zeitraum nach dem Abscheiden des abgeschiedenen EBC (68) auf dem Substrat (24) auf oder oberhalb einer Hitzebehandlungstemperatur umfasst.

9. Verfahren nach Anspruch 8, wobei das hitzebehandelte EBC (68) mindestens 96 Gewichtsprozent der kristallinen Phase umfasst.

10. System (10), umfassend:
einen Ofen (12) mit einem Ofengehäuse (14), wobei der Ofen (12) für die Erhitzung einer Rückseite (40) eines Substrats (24) unter Verwendung des Ofengehäuses (14) gestaltet ist, wobei eine Vorderseite (42) des Substrats (24) außerhalb des Ofengehäuses (14) liegt;
eine thermische Spritzvorrichtung (22); und
eine Rechenvorrichtung (18), die zur Steuerung des Ofens (12) zur Erhitzung der Rückseite (40) des Substrats (24) unter Verwendung des Ofengehäuses (14) gestaltet ist, um die Vorderseite (42) des Substrats (24) durch Wärmeleitung von der Rückseite (40) des Substrats (24) zu der Vorderseite (42) des Substrats (24) auf eine Oberflächentemperatur zu erhitzen; und zur Steuerung der thermischen Spritzvorrichtung (22) zur Abscheidung eines Environmental Barrier Coating (EBC) (68) auf die Vorderseite (42) des Substrats (24), während die Rückseite (40) des Substrats (24) unter Verwendung des Ofengehäuses (14) erhitzt wird, wobei die Oberflächentemperatur der Vorderseite (42) des Substrats (24) so ausgewählt wird, um mindestens eines der folgenden zu regeln: eine Porosität des abgeschiedenen EBC (68) oder einen prozentualen Gewichtsanteil einer kristallinen Phase in dem abgeschiedenen EBC (68).

11. System (10) nach Anspruch 10, wobei das Erhitzen der Rückseite (40) des Substrats (24) unter Verwendung des Ofengehäuses (14) das Erhitzen der Rückseite (40) des Substrats (24) umfasst, wobei das Ofengehäuse (14) eine Ofentemperatur von mindestens 1.000 Grad Celsius bis 1.400 Grad Celsius aufweist.

12. System (10) nach Anspruch 10, wobei die Oberflächentemperatur der Vorderseite (42) mindestens 1.000 Grad Celsius beträgt, während das EBC (68) auf die Vorderseite (42) des Substrats (24) abgeschieden wird.

13. System (10) nach Anspruch 10, wobei die Oberflächentemperatur der Vorderseite (42) größer oder gleich einer kristallinen Übergangstemperatur des EBC (68) ist, wenn das EBC (68) auf die Vorderseite (42) des Substrats (24) abgeschieden wird.

14. System (10) nach einem der Ansprüche 10 bis 13, wobei das Ofengehäuse (14) eine Öffnung (46) definiert, die ungefähr eine Größe und Form des Substrats (24) aufweist, wobei sich das Substrat (24) während dem Erhitzen der Rückseite in der Öffnung (46) des Ofengehäuses (14) befindet, so dass sich die Rückseite (40) des Substrats (24) in dem Ofengehäuse (14) befindet und sich die Vorderseite (42) des Substrats (24) außerhalb des Ofengehäuses (14) befindet.

## Revendications

1. Procédé comprenant les étapes consistant à :
chauffer (52) une face arrière (40) d'un substrat (24) en utilisant une enceinte de four (14), une face avant (42) du substrat (24) étant à l'extérieur de l'enceinte de four (14), le chauffage de la face arrière (40) du substrat (24) avec l'enceinte de four (14) chauffant la face avant (42) du substrat (24) à une température de surface par conduction thermique de la face arrière (40) du substrat (24) à la face avant (42) du substrat (24) ; et
déposer (54) un revêtement de barrière environnementale (EBC) (68) sur la face avant (42) du substrat (24) par l'intermédiaire d'un dispositif de pulvérisation thermique (22) tandis que la face arrière (40) du substrat (24) est chauffée en utilisant l'enceinte de four (14), la température de surface de la face avant (42) du substrat (24) étant sélectionnée pour réguler au moins une porosité de l'EBC (68) déposé ou un pourcentage en poids d'une phase cristalline dans l'EBC (68) déposé.

2. Procédé selon la revendication 1, le chauffage de la face arrière (40) du substrat (24) en utilisant l'enceinte de four (14) comprenant l'étape consistant à chauffer la face arrière (40) du substrat (24) avec l'enceinte de four (14) ayant une température de four d'au moins 1 000 degrés Celsius à 1 400 degrés Celsius.

3. Procédé selon la revendication 1, la température de surface de la face avant (42) étant d'au moins 1 000 degrés Celsius pendant que le EBC (68) est déposé sur la face avant (42) du substrat (24).

4. Procédé selon la revendication 1, la température de surface de la face avant (42) étant égale ou supérieure à une température de transition cristalline de l'EBC (68) lorsque l'EBC (68) est déposé sur la face avant (42) du substrat (24).

5. Procédé selon l'une quelconque des revendications 1 à 4, l'enceinte de four (14) définissant une ouverture (46) ayant approximativement la taille et la forme du substrat (24), le substrat (24) étant situé dans l'ouverture (46) de l'enceinte de four (14) pendant le chauffage de la face arrière de sorte que la face arrière (40) du substrat (24) soit à l'intérieur de l'enceinte de four (14) et que la face avant (42) du substrat (24) soit à l'extérieur de l'enceinte de four (14).

6. Procédé selon l'une quelconque des revendications 1 à 5, la face avant (42) du substrat (24) n'étant pas chauffée par une autre source de chauffage pendant le dépôt de l'EBC (68) sur la face avant (42).

7. Procédé selon l'une quelconque des revendications 1 à 6, l'EBC (68) déposé comprenant au moins 50 pour cent en poids de phase cristalline.

8. Procédé selon l'une quelconque des revendications 1 à 7, comprenant en outre l'étape consistant à soumettre à un traitement thermique (56) l'EBC (68) déposé à une température de traitement thermique ou au-dessus de celle-ci pendant une première période de temps suivant le dépôt de l'EBC (68) déposé sur le substrat (24).

9. Procédé selon la revendication 8, l'EBC (68) traité thermiquement comprenant au moins 96 pour cent en poids de phase cristalline.

10. Système (10), comprenant :
un four (12) comprenant une enceinte de four (14), le four (12) étant conçu pour chauffer une face arrière (40) d'un substrat (24) en utilisant l'enceinte de four (14) tandis qu'une face avant (42) du substrat (24) est à l'extérieur de l'enceinte de four (14) ;
un dispositif de pulvérisation thermique (22) ; et
un dispositif informatique (18) conçu pour commander le four (12) pour chauffer la face arrière (40) du substrat (24) en utilisant l'enceinte de four (14) pour chauffer la face avant (42) du substrat (24) à une température de surface par conduction thermique de la face arrière (40) du substrat (24) à la face avant (42) du substrat (24) ; et commander le dispositif de pulvérisation thermique (22) pour déposer un revêtement de barrière environnementale (EBC) (68) sur la face avant (42) du substrat (24) tandis que la face arrière (40) du substrat (24) est chauffée en utilisant l'enceinte de four (14), la température de surface de la face avant (42) du substrat (24) étant sélectionnée pour réguler au moins l'un parmi une porosité de l'EBC (68) déposé ou un pourcentage en poids d'une phase cristalline dans l'EBC (68) déposé.

11. Système (10) selon la revendication 10, le chauffage de la face arrière (40) du substrat (24) en utilisant l'enceinte de four (14) comprenant le chauffage de la face arrière (40) du substrat (24) avec l'enceinte de four (14) ayant une température de four d'au moins 1 000 degrés Celsius à 1 400 degrés Celsius.

12. Système (10) selon la revendication 10, la température de surface de la face avant (42) étant d'au moins 1 000 degrés Celsius pendant que l'EBC (68) est déposé sur la face avant (42) du substrat (24).

13. Système (10) selon la revendication 10, la température de surface de la face avant (42) étant égale ou supérieure à une température de transition cristalline de l'EBC (68) lorsque l'EBC (68) est déposé sur la face avant (42) du substrat (24).

14. Système (10) selon l'une quelconque des revendications 10 à 13, l'enceinte de four (14) définissant une ouverture (46) ayant approximativement la taille et la forme du substrat (24), le substrat (24) étant situé dans l'ouverture (46) de l'enceinte de four (14) pendant le chauffage de la face arrière de sorte que la face arrière (40) du substrat (24) se trouve à l'intérieur de l'enceinte de four (14) et la face avant (42) du substrat (24) se trouve à l'extérieur de l'enceinte de four (14).
